(19) Europäisches Patentamt
European Patent Office
Office européen des brevets

(11) EP 4 603 806 A1

(12) EUROPEAN PATENT APPLICATION

(43) Date of publication:
20.08.2025 Bulletin 2025/34

(21) Application number: 24157254.4

(22) Date of filing: 13.02.2024

(51) International Patent Classification (IPC):
G01J 3/02 (2006.01)     G01J 3/28 (2006.01)
G01J 3/44 (2006.01)     G01J 3/453 (2006.01)

(52) Cooperative Patent Classification (CPC):
G01J 3/0205; G01J 3/0218; G01J 3/0256;
G01J 3/28; G01J 3/44; G01J 3/4531

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ETH Zurich
8092 Zurich (CH)

(72) Inventors:
• GRANGE, Rachel
2800 Delémont (CH)
• MORANDI, Andrea
8051 Zürich (CH)
• NARDI, Alfonso
8052 Zürich (CH)

(54) SPECTROMETER ASSEMBLY

(57) A spectrometer assembly (1) for determining spectral information about incoming electromagnetic radiation (F) comprises a radiation conversion element (2) that comprises a non-centrosymmetric material to frequency-double at least a portion of the incoming electromagnetic radiation (F) as the incoming electromagnetic radiation (F) propagates through the radiation conversion element (2). The radiation conversion element (2) exhibits a spatially inhomogeneous structure such that the frequency-doubled electromagnetic radiation (SH) comprises components propagating in a plurality of different directions. The spectrometer assembly further comprises a detection unit (3) which is configured to record a spatial speckle image that is generated by spatial interference of the components of the frequency-doubled electromagnetic radiation (SH) with each other, and a computing unit (4) which is configured to retrieve spectral information about the electromagnetic radiation (F) based on said spatial speckle image.

FIG. 1

EP 4 603 806 A1

**Description**

TECHNICAL FIELD

The present invention relates to a spectrometer assembly for determining spectral information about incoming electromagnetic radiation, a calibration method for said spectrometer assembly and a method for determining spectral information about incoming electromagnetic radiation using said spectrometer assembly. The present invention further relates to an optical setup comprises said spectrometer assembly and a method of operating said optical setup.

PRIOR ART

Spectrometers are one of the most essential tools in science and technology, as they enable the measurement of the spectral content of electromagnetic radiation, i.e. the intensity of the electromagnetic radiation as a function of wavelength or frequency. Spectrometers that are capable of providing "online" spectral information about incoming electromagnetic radiation and that are thus suitable for monitoring dynamic processes, such as for instance wavelength tuning of an optical source, are often termed "fast" spectrometers. To enable the necessary speed, fast spectrometers usually do not comprise any mechanical moving (i.e. scanning) elements, but instead often comprise a first part that converts the spectral information into spatial information, for example, by dispersing different wavelengths at different angles using a prism or grating, and a second part in form of a pixel detector which then captures the intensity of the electromagnetic radiation as a function of the spatial distribution. Using appropriate calibration methods, the spectral information can then be retrieved from the spatial distribution.
However, components such as gratings and prims to convert spectral information into spatial information tend to be scarce and expensive in certain regions of the electromagnetic spectrum, in particular for optical wavelengths in the mid-infrared and far-infrared range.

SUMMARY OF THE INVENTION

In a first aspect, it is thus an object of the present invention to provide a versatile spectrometer assembly that allows for fast determination of spectral information about incoming electromagnetic radiation.
This object is achieved by a spectrometer assembly for determining spectral information about incoming electromagnetic radiation according to claim 1. Further embodiments of the invention are laid down in the dependent claims.
A spectrometer assembly for determining spectral information about incoming electromagnetic radiation is thus provided, comprising:

a radiation conversion element that comprises a non-centrosymmetric material to frequency-double at least a portion of the incoming electromagnetic radiation as the incoming electromagnetic radiation propagates through the radiation conversion element, wherein the radiation conversion element exhibits a spatially inhomogeneous structure such that the frequency-doubled electromagnetic radiation comprises components propagating in a plurality of different directions;
a detection unit arranged after the radiation conversion element with respect to a propagation direction defined by the incoming electromagnetic radiation, the detection unit being configured to record a spatial speckle image that is generated by spatial interference of the components of the frequency-doubled electromagnetic radiation with each other, and
a computing unit configured to retrieve spectral information about the electromagnetic radiation based on said spatial speckle image.

In the following, the term "wavelength" and "optical frequency" are used interchangeably, since a wavelength can always be converted into an optical (angular) frequency and vice versa by taking into consideration the propagation medium.
The incoming electromagnetic radiation may in particular be optical radiation lying within a fundamental wavelength band of between 100 nm and 1000 $\mu$m, preferably between 300 nm and 10 $\mu$m, more preferably between 700 nm and 5 $\mu$m.
The interaction between electromagnetic radiation and a material depends on the so-called susceptibilities of the material, which are tensor quantities describing the response of the material to the electromagnetic radiation. The susceptibilities may be typically defined via a Taylor expansion of the dielectric polarization density in response to the electric field of the electromagnetic radiation. Non-centrosymmetric materials are materials for which the second-order susceptibility tensor of said Taylor expansion is non-zero.

When interacting with a non-centrosymmetric material, a portion of the incoming electromagnetic radiation can be frequency-doubled, i.e. so-called second-harmonic generation can occur, wherein electromagnetic radiation at half of the wavelength of the incoming electromagnetic radiation is generated if the phase-matching conditions are met, i.e. if the wavevector $k_1$ of the incoming electromagnetic radiation and the wavevector $k_2$ of the frequency-doubled electromagnetic radiation satisfy the following condition within the non-centrosymmetric material:

$$\Delta k = k_2 - k_1 = 0,$$

wherein the phase-mismatch $\Delta k$ is generally caused by the chromatic dispersion of the non-centrosymmetric material.

The radiation conversion element having a spatially inhomogeneous structure preferably exhibits second-order susceptibility tensors that are spatially oriented in a random manner. The random orientation leads to so-called "random quasi-phase-matching" and provides the benefit of allowing second-harmonic generation across a broader fundamental wavelength band than in an element in which the susceptibility tensor is homogeneously oriented, as would typically be the case in a single-crystal-element, or than in an element in which the susceptibility tensor is periodically reversed, as would typically be the case in a periodically-poled element. In addition, random quasi-phase-matching in a spatially inhomogeneous structure provides the advantage of enabling second-harmonic generation independently of the polarization of the incoming electromagnetic radiation. Furthermore, other nonlinear processes such as sum-frequency generation and difference-frequency generation tend to be suppressed within such a structure.

The spatially inhomogeneous structure of the radiation conversion element causes scattering of the incoming electromagnetic radiation and/or the frequency-doubled electromagnetic radiation. The scattering may be understood as a process governed by the linear response of the spatially inhomogeneous structure, in which the field components of the electromagnetic radiation get refracted and/or reflected multiple times, thereby arbitrarily changing the propagation direction of these field component within the spatially inhomogeneous structure.

Different types of spatially inhomogeneous structures may be conceivable to achieve such scattering in combination with second-harmonic generation.

For instance, the radiation conversion element may comprise a plurality of particles comprising or consisting of the non-centrosymmetric material, wherein the particles are randomly oriented within the radiation conversion element. The phase-matching conditions may thus be different at each particle, since the susceptibility tensor of the material may be randomly oriented, leading to broadband second-harmonic generation.

The particles may have different shapes, in particular, they may be spherical and/or cube-shaped.

Typically, the spectral width of the fundamental wavelength band that can be frequency-doubled by the radiation conversion element scales with a diameter distribution of the particles, i.e. a broader distribution of particle diameters leads to a broader spectral width of the fundamental wavelength band for which second-harmonic generation may occur.

In order to maximize scattering within the radiation conversion element, it may be advantageous to choose particle diameters which are on the order of the wavelength of the incoming electromagnetic radiation divided by the refractive index of the material of the particles.

In particular, the particles may have a diameter that is between 100 nm and 2500 nm, preferably between 100 nm and 1000 nm.

Alternatively, the radiation conversion element may comprise holes distributed within the non-centrosymmetric material, the holes being filled with a second medium exhibiting a different refractive index than the non-centrosymmetric material, preferably a lower refractive index than the non-centrosymmetric material. The second medium may be a gas, in particular air.

The phase-matching conditions may be different at each hole. Thus, typically, the spectral width of the fundamental wavelength band that can be frequency-doubled by the radiation conversion element scales with a diameter distribution of the holes, i.e. a broader distribution of hole diameters leads to a broader spectral width of the fundamental wavelength band for which second-harmonic generation may occur.

In particular, the holes may have a diameter that is between 100 nm and 2500 nm, preferably between 100 nm and 1000 nm.

In order to obtain strong scattering and thus distinctive spatial speckle images, the radiation conversion element preferably has a thickness in propagation direction which is at least as large as, preferably at least 10 times larger than, a transport mean free path length experienced by the electromagnetic radiation propagating within the radiation conversion element, the transport mean free path length being defined as an average distance that a photon travels in the radiation conversion element before its direction is completely randomized. In particular, the thickness of the radiation conversion element may be between 10 μm and 20 μm.

The spectrometer assembly may further comprise a filter arranged between the radiation conversion element and the detection unit, the filter being configured to block electromagnetic radiation within the fundamental wavelength band while allowing the frequency-doubled electromagnetic radiation to pass.

The non-centrosymmetric material used in the radiation conversion element may be one of lithium niobate, barium titanate, gallium arsenide, aluminium gallium arsenide and zinc oxide. The radiation conversion element may also comprise a combination of these elements to broaden the wavelength range that may be simultaneously frequency-doubled.

Lithium niobate may be particularly suitable for incoming electromagnetic radiation in the fundamental wavelength band of 350 nm to 4.5 $\mu$m.

Barium titanate may be particularly suitable for incoming electromagnetic radiation in the fundamental wavelength band of 387 nm to 6.7 $\mu$m.

Gallium arsenide may be particularly suitable for incoming electromagnetic radiation in the fundamental wavelength band of 870 nm to 16 $\mu$m.

Aluminium gallium arsenide may be particularly suitable for incoming electromagnetic radiation in the fundamental wavelength band of 900 nm to 17 $\mu$m.

Zinc oxide may be particularly suitable for incoming electromagnetic radiation in the fundamental wavelength band of 250 nm to 800 nm.

The detection unit may comprise a silicon (Si) detector and/or an indium gallium arsenide (InGaAs) detector and/or a germanium (Ge) detector and/or an indium antimonide detector (InSb) or a mercury cadmium telluride detector (HgCdTe) to record the spatial speckle image.

Preferably, a silicon detector (Si) may be used if the incoming electromagnetic radiation is in the fundamental wavelength band of 300 nm to 2.2 $\mu$m. Silicon-based detectors provide the advantage of having faster response times and being cheaper than most other types of detectors.

An indium gallium arsenide detector (InGaAs) may be used if the incoming electromagnetic radiation is in the fundamental wavelength band of 900 nm to 5 $\mu$m.

A germanium detector (Ge) may be used if the incoming electromagnetic radiation is in the fundamental wavelength band of 800 nm to 3.6 $\mu$m.

An indium antimonid detector (InSb) may be used if the incoming electromagnetic radiation is in the fundamental wavelength band of 1.5 $\mu$m nm to 11 $\mu$m.

Independently of the type of detector material, the detector is preferably a camera, in particular with at least 1000 x 1000 pixels. In general, the obtainable spectral resolution increases when increasing the number of pixels.

In a second aspect, the present invention provides a calibration method for obtaining a calibration data set using a spectrometer assembly as described above is disclosed, the method comprising:

a) sending electromagnetic calibration radiation having a known spectrum through the radiation conversion element of the spectrometer assembly, wherein at least a portion of the electromagnetic calibration radiation is frequency-doubled within the radiation conversion element, and wherein the frequency-doubled electromagnetic calibration radiation comprises components propagating in a plurality of different directions;

b) recording a spatial calibration speckle image that is generated by spatial interference of the components of the frequency-doubled electromagnetic calibration radiation with each other;

c) repeating steps a) and b) multiple times for a plurality of different known optical spectra in order to obtain a calibration speckle image for each of the different optical spectra, the calibration speckle images forming the calibration data set.

The known spectrum of the electromagnetic calibration radiation may have a spectral width which is chosen depending on a desired spectral resolution to be achieved by the spectrometer assembly. In particular, the spectral width of the known spectrum of the electromagnetic calibration radiation may be less than 10 nm, ideally less than 1 nm. Preferably, the different known optical spectra are obtained from a calibration source emitting electromagnetic calibration radiation with a spectrum having a central wavelength that can be tuned in steps, in particular in equidistant steps. The steps may be preferably larger than the spectral width. In particular, the steps may be in the range of 0.1 nm to 1 nm.

The calibration source may in particular be a wavelength-tunable laser.

In addition, the calibration method may also comprise recording a spatial calibration speckle image of the calibration electromagnetic radiation in the fundamental wavelength band, i.e. generated by the spatial interference of components of the non-frequency-doubled electromagnetic calibration radiation that are scattered within the radiation conversion element. For this, a suitable filter blocking the frequency-doubled electromagnetic radiation and allowing the electromagnetic radiation in the fundamental wavelength band to pass may be placed in front of the detection unit.

In a third aspect, the present invention provides a method for determining spectral information about incoming electromagnetic radiation to be analyzed using a spectrometer assembly according to the first aspect of the present invention, the method comprising:

a) sending the incoming electromagnetic radiation to be analyzed through the radiation conversion element of the spectrometer assembly, wherein at least a portion of the incoming electromagnetic radiation is frequency-doubled within the radiation conversion element, and wherein the frequency-doubled portion of the electromagnetic radiation comprises components propagating in a plurality of different directions;

b) recording a spatial sample speckle image generated by spatial interference of the components of the frequency-doubled electromagnetic radiation with each other, and

c) retrieving spectral information about the incoming electromagnetic radiation based on said spatial sample speckle image.

In addition, the method may also comprise recording a spatial sample speckle image of the incoming electromagnetic radiation in the fundamental wavelength band, i.e. generated by the spatial interference of components of the non-frequency-doubled incoming electromagnetic radiation that are scattered within the radiation conversion element. For this, a suitable filter blocking the frequency-doubled electromagnetic radiation and allowing the electromagnetic radiation in the fundamental wavelength band to pass may be placed in front of the detection unit. By recording both a spatial sample speckle image of the incoming electromagnetic radiation in the fundamental wavelength band as well as a spatial sample speckle image of the frequency-doubled electromagnetic radiation, the spectral detection bandwidth that may be covered using a single detector material may be increased. In some cases, the spectral width of the incoming electromagnetic radiation in the fundamental wavelength band may partially overlap with a detector sensitivity range of the detection unit, the detector sensitivity range being defined as the spectral bandwidth over which the detector material is sensitive, i.e. capable of providing a measurable signal response. In such cases, the spatial sample speckle image of the incoming electromagnetic radiation in the fundamental wavelength band may be used to retrieve spectral information about a first spectral portion of the incoming electromagnetic radiation in a spectral region that overlaps with the detector sensitivity range of the detection unit, while the spatial sample speckle image of the frequency-doubled electromagnetic radiation may be used to retrieve spectral information about a second spectral portion the incoming electromagnetic radiation in a spectral region that lies outside of the detector sensitivity range, but that overlaps with the detector sensitivity range of the detection unit once it has been frequency-doubled. The spectral information about the first and second spectral portion may then be combined to provide full spectral information about the incoming electromagnetic radiation, in particular a complete spectrum of the incoming electromagnetic radiation.

In particular, retrieving the spectral information may comprise:

computing correlation values between the spatial sample speckle image and a calibration data set comprising spatial calibration speckle images.

Preferably, the method comprises obtaining the calibration data set using the calibration method described above.

Recording a spatial calibration image and/or a sample spatial speckle image may comprise setting a pre-determined integration time for the detection unit, the pre-determined integration time being in particular between 0.1 ms and 100 ms.

Due to the absence of moving parts in the spectrometer assembly, the spectral information can be retrieved almost instantly, i.e. essentially only being limited by the integration time of the detection unit.

In a fourth aspect, the invention provides an optical setup comprising:

an optical source, in particular an optical parametric oscillator, configured to emit electromagnetic radiation with a tunable optical spectrum;

the spectrometer assembly of the first aspect of the present invention,

a control unit, wherein the control unit is configured to receive spectral information from the spectrometer assembly and to tune the optical spectrum of the electromagnetic radiation emitted by the optical source based on said spectral information.

The parametric oscillator may in particular emit electromagnetic radiation in the fundamental wavelength band of 1 $\mu$m to 5 $\mu$m.

In a fifth aspect, the present invention provides a method of operating an optical setup according to the fourth aspect of the present invention, the method comprising:

determining spectral information about the electromagnetic radiation emitted by the optical source using the method of the third aspect of the present invention;

tuning the optical spectrum of the electromagnetic radiation based on said spectral information.

Such tuning may in particular be done "online", i.e. while the optical source is emitting the electromagnetic radiation, which may be particularly useful when aligning mechanical parts of the optical source. In some cases, tuning the optical spectrum may be achieved by mechanically changing a path length of the electromagnetic radiation within the optical source.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     schematically shows a spectrometer assembly according to a first embodiment;
Fig. 2     schematically shows a spectrometer assembly according to a first embodiment;
Fig. 3     schematically shows a radiation conversion element according to a first embodiment;
Fig. 4     schematically shows a radiation conversion element according to a second embodiment;
Fig. 5     schematically shows a radiation conversion element according to a third embodiment;
Fig. 6     schematically shows an embodiment of a method for determining spectral information about incoming electromagnetic radiation according to the present invention;
Fig. 7     shows a measured example of a spatial speckle image generated by frequency-doubled electromagnetic radiation;
Fig. 8     shows spectral information having been retrieved from the speckle image shown in Fig. 7;
Fig. 9     shows a measured example of a linear spatial speckle image generated by non-frequency-doubled electromagnetic radiation;
Fig. 10    shows spectral information having been retrieved from the speckle image shown in Fig. 9, and
Fig. 11    schematically shows an optical setup according to the fifth aspect of the present invention.

DESCRIPTION OF PREFERRED EMBODIMENTS

Spectrometer assembly

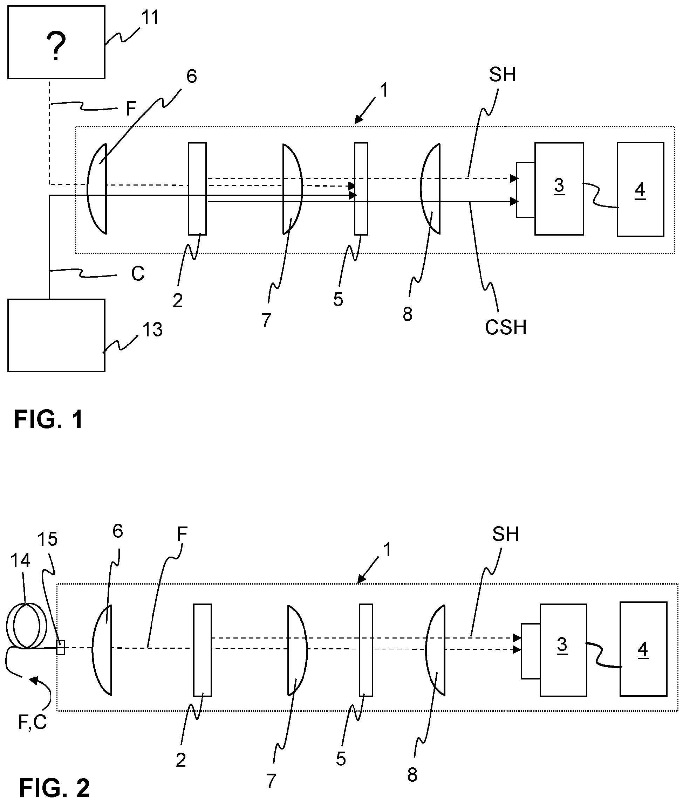

Fig. 1 shows a spectrometer assembly 1 according to a first embodiment together with a source 11 emitting electromagnetic radiation F to be analyzed, and with a calibration source 13 emitting electromagnetic calibration radiation C. Fig. 1 shows the electromagnetic radiation F,C of both the source to be analyzed and the calibration source in a single figure for illustrative purposes. However, temporally, only electromagnetic radiation from one of the sources 11, 13 is preferably coupled into the spectrometer assembly 1 at the time, while the other source is switched off or blocked or not present at the same time. The electromagnetic radiation F to be analyzed and the electromagnetic calibration radiation C lie within a fundamental wavelength band. Upon entering the spectrometer assembly 1, the electromagnetic radiation F to be analyzed and the calibration radiation C are being focused by a first focusing lens 6 into a radiation conversion element 2 that comprises a non-centrosymmetric material to frequency-double at least a portion of the electromagnetic radiation F to be analyzed and at least a portion of the electromagnetic calibration radiation C. After passing through the radiation conversion element 2, the electromagnetic radiation F, C in the fundamental wavelength band and the frequency-doubled portions SH, CSH are collimated by a collimation lens 7, and subsequently impinge on a filter 5. The filter 5 is configured to block the electromagnetic radiation F, C within the fundamental wavelength band, while allowing the frequency-doubled electromagnetic radiation SH, CSH to pass and reach a detector unit 3. As shown in Fig. 1, a second focusing lens 8 can be arranged between the filter 5 and the detector unit 3 to focus the frequency-doubled electromagnetic radiation SH, CSH onto the detector unit 3. The detector unit 3 is configured to record a spatial speckle image that is generated by spatial interference of the components of the respective frequency-doubled electromagnetic radiation SH, CSH with each other. The spectrometer assembly 1 further comprises a computing unit 4, which is connected to the detector unit 3 and is configured to retrieve spectral information about the electromagnetic radiation F,C based on said spatial speckle image. The electromagnetic radiation F to be analyzed and/or the electromagnetic calibration radiation C may be coupled into the spectrometer assembly using free-space alignment, e.g. using one or more mirrors or beamsplitters or other appropriate beam routing components (not shown). Some or all of the components of the spectrometer assembly 1 may be mounted on holders which are displaceable with respect to each other to enable optimization of the alignment of the spectrometer assembly 1.

In some embodiments, some or all of the components of the spectrometer assembly 1 are pre-aligned and subsequently spatially fixed with respect to each other to prevent unintentional misalignment. In a second embodiment shown in Fig. 2, the spectrometer assembly 1 comprises a fiber input port 15 into which an optical fiber 14 can be plugged, the optical fiber 14 guiding the electromagnetic radiation F to be analyzed and/or the electromagnetic calibration radiation C towards the fiber input port 15. The source 11 emitting the electromagnetic radiation F to be analyzed, and the calibration source 13 emitting electromagnetic calibration radiation C are not shown in Fig. 2 for simplicity.

In a specific embodiment, the incoming electromagnetic radiation F is light in the fundamental wavelength band of 690 nm-1040 nm, and the light is guided towards the fiber input port 15 using a single-mode fiber suitable for said fundamental wavelength band. The fiber input port 15 comprises a fiber collimation lens (not shown in the drawings) with a focal length of 18 mm. The first focusing lens 6 and the collimation lens 7 are aspheric lenses with an effective focal length of 20 mm, and the second focusing lens 8 is an achromatic lens with an effective focal length of 200 mm. The radiation conversion sample 2 comprises a slab made of lithium niobate (LiNbOa) nanoparticles arranged on a glass substrate, the slab having a slab thickness of 20 $\mu$m in propagation direction and the glass substrate having a substrate thickness of 170 $\mu$m in propagation direction. The filter 5 is a colored glass bandpass filter with a transmission window ranging from 315 nm to 725 nm. The detection unit 3 comprises a monochrome silicon-based CMOS camera with 1440 x 1080 pixels, wherein each pixel has a pixel size of 3.45 $\mu$m x 3.45 $\mu$m.

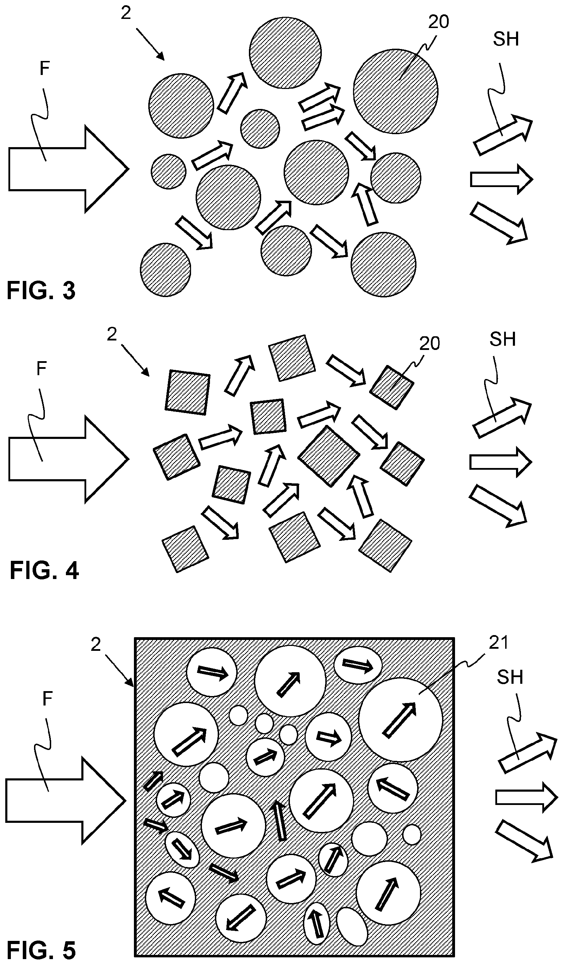

In Figs. 1 and 2, the frequency-doubled electromagnetic radiation SH and frequency-doubled electromagnetic calibration radiation CSH are sketched using straight arrows to indicate the general propagation direction on a macroscopic level. However, on a microscopic level, the radiation conversion element 2 exhibits a spatially inhomogeneous structure such that the frequency-doubled electromagnetic radiation SH, CSH is scattered by the radiation conversion element 2, i.e. such that the frequency-doubled electromagnetic radiation SH, CSH comprises components propagating in a plurality of different directions. Figs. 3-5 show three different embodiments of the radiation conversion element 2. Any of these embodiments may be implemented in the spectrometer assemblies shown in Figs. 1 and 2.

Both the embodiments of the radiation conversion element 2 shown in Fig. 3 and Fig. 4 comprise a plurality of particles 20, which are randomly oriented within the radiation conversion element 2, and which comprise or consist of the non-centrosymmetric material that causes the frequency-doubling. In Fig. 3, the particles 20 are substantially spherical. In Fig. 4, the particles 20 are substantially cube-shaped. In the embodiment of the radiation conversion element 2 shown in Fig. 5, the scattering is caused by holes 21 being distributed within the non-centrosymmetric material, the holes 21 being filled with a second medium exhibiting a different refractive index than the non-centrosymmetric material (hatched area in Fig. 5), e.g. with air.

Fabrication of the radiation conversion element

In the following, a fabrication procedure for a specific embodiment of the radiation conversion is described, which comprises crystalline lithium niobate (LiNbOa) particles produced via solvothermal synthesis. In a first step, precursors oxides $Nb_2O_5$ (H.C. Starck, 99.2%) and LiOH (Aldrich, 98%) are dispersed in a mixture of ethylene glycol and distilled water. In a second step, the suspension is subjected to ultrasonication. In a third step, the suspension is poured into a PTFE coated stainless steel acid digestion bomb (e.g. model PA4748, volume 120 ml, Parr Instrument Company) and hydrothermally treated at 250°C for 70 hours. In a fourth step, the reaction product is washed with water by centrifugation. This chemical synthesis enables precise control over the size distribution of the produced particles. The particles produced using this fabrication procedure are nanocubes having diameters ranging from 100 nm to 400 nm, a linear refractive index of n $\approx$ 2.3, and negligible absorption at visible wavelengths. They have a non-centrosymmetric hexagonal R3c crystal structure that enables second-harmonic generation, i.e. frequency doubling. In a fifth step, the particles are assembled into a slab by drop deposition over a substrate and solvent evaporation. For a fundamental wavelength being shorter than 5 $\mu$m, a substrate made of sapphire is preferably used. For a fundamental wavelength being longer than 5 $\mu$m, the substrate may be made of silicon (Si) or gallium arsenide (GaAs) or other suitable material being transparent at the fundamental wavelength.

Further details regarding the fabrication are disclosed in A. Morandi et al., "Multiple Scattering and Random Quasi-Phase-Matching in Disordered Assemblies of LiNbOa Nanocubes," ACS Photonics, pp. 1882-1888, 2022, DOI: 10.1021/acsphotonics.2c00210. Compared to the fabrication procedure described by A. Morandi et al., the following modifications have found to yield improved results:

- To achieve different slab thicknesses, an aqueous suspension containing 10 wt% to 30 wt% of LiNbOa nanocubes may be prepared. It has been found that 26 wt % of water suspension is the most favourable for achieving a thickness in the desired thickness range of between 10 $\mu$m and 200 $\mu$m. Moreover, it has been found that including polyvinyl alcohol is not necessary.
- The mixture may be dropped over a substrate that is framed by hydrophilic tape without prior plasma cleaning of the substrate.
- Instead of being kept at 0°C for 36 hours, the substrate with the mixture on it may be placed onto a horizontal substrate holder and kept at room temperature for less than 36 hours, in particular between 5 and 10 hours, leading to faster evaporation of the water and thus fast settling of the nanocubes on the glass substrate.

As described in the reference by A. Morandi et al., the LiNbOa nanocubes fabricated as described above may be further used in an emulsion-templated assembly technique to obtain substantially spherical particles. In particular, 10 $\mu$L of aqueous an aqueous suspension containing 2 wt% of the LiNbOa nanocubes may be mixed with 1 mL of surfactant-loaded (10 wt % SPAN 80) hexadecane, followed by an emulsification process obtained though mechanical shaking. This generates a polydispersed distribution of water-in-oil droplets filled with the nanocubes, which can then be collected and deposited on a glass substrate with a pipet. The water in the droplets diffuses into the oil, shrinking the size of the droplets and forcing the nanocubes to assemble into microspheres. During this process, the Brownian motion of the nanocubes in the droplets ensures that each nanocube is positioned and oriented randomly within the microsphere. The obtained microspheres can have diameters ranging from 2 to 40 $\mu$m.

Other process to obtain nanocubes or spherical particles or nanowires made of metal-oxides may also be conceivable, such as hydrothermal processes, molten salt synthesis for lithium niobate since or flame pyrolysis.

A radiation conversion element that comprises holes as shown in Fig. 5 may be obtained using e.g. an inverse opal process to obtain a photonic crystal as described in A. Blanco et al. "Large-scale synthesis of a silicon photonic crystal with a complete three-dimensional bandgap near 1.5 micrometres," Nature 405, 437-440 (2000), https://doi.org/10.1038/35013024. Alternatively, it is also conceivable to use a lithographic process as described in N. Muller et. al, "Silicon Hyperuniform Disordered Photonic Materials with a Pronounced Gap in the Shortwave Infrared," Advanced Optical Materials, 2: 115-119(2014), https://doi.org/10.1002/adom.201300415.

Measurement method and calibration

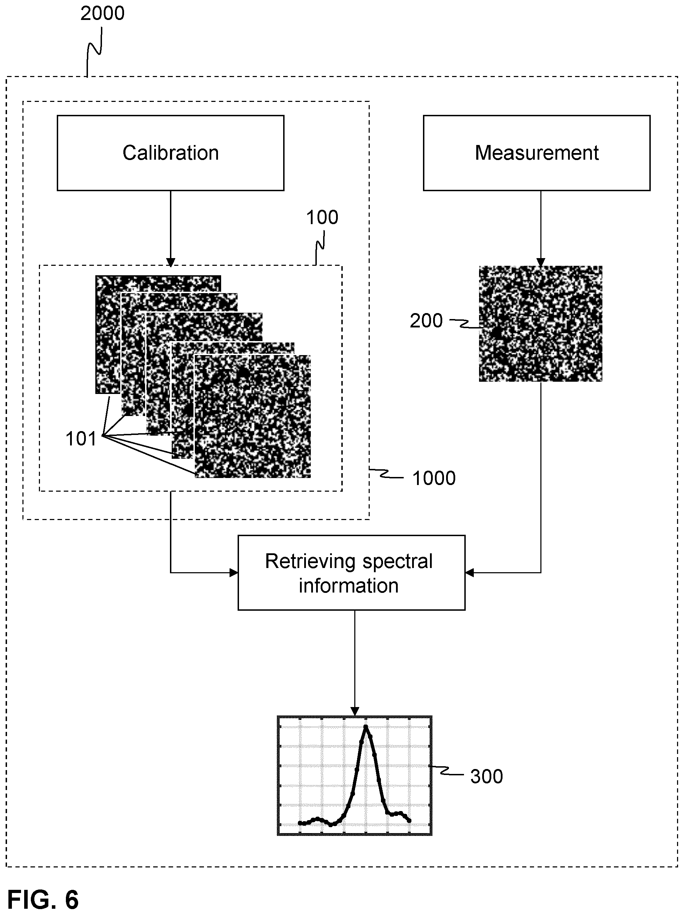

Fig. 6 schematically shows an embodiment of a method for determining spectral information 2000 about incoming electromagnetic radiation F to be analyzed using an embodiment of the spectrometer assembly 1 described above. In this embodiment, a calibration data set 100 is first obtained using a calibration method 1000, which comprises:

a) sending electromagnetic calibration radiation C having a known spectrum through the radiation conversion element 2 of the spectrometer assembly 1, as shown in Fig. 1 and Fig. 2, wherein at least a portion of the electromagnetic calibration radiation C is frequency-doubled within the radiation conversion element 2, and wherein the frequency-doubled electromagnetic calibration radiation CSH comprises components propagating in a plurality of different directions;

b) recording a spatial calibration speckle image 101 that is generated by spatial interference of the components of the frequency-doubled electromagnetic calibration radiation CSH with each other;

c) repeating steps a) and b) multiple times for a plurality of different known optical spectra in order to obtain a calibration speckle image 101 for each of the different optical spectra, the calibration speckle images forming the calibration data set 100.

In a specific embodiment of the calibration method, the electromagnetic calibration radiation C originates from a frequency-tunable laser, and spatial calibration speckle images 101 are recorded for different center frequencies $\nu_0$, wherein the spectral shape stays the same spectrum for any central wavelength $\nu_0$, i.e., tuning the center frequency only translates the spectrum: $S_C(\nu - \nu_0)$. The input power of the electromagnetic calibration radiation C before entering the radiation conversion element can be expressed as:

$$P_C = \int_{-\infty}^{\infty} S_C(\nu - \nu_0)\, d\nu$$

The input electric field of the electromagnetic calibration radiation C in the time-domain can be expressed as a Fourier integral, i.e.

$$E_C(t) = \int_{-\infty}^{\infty} \alpha(\nu) \exp(-2\pi i \nu t)\, d\nu$$

wherein the relation between the spectrum and amplitude $\alpha(\nu)$ of the Fourier components is

$$S_C(\nu - \nu_0) = \lim_{T \to \infty} \frac{\overline{|\alpha(\nu)|^2}}{2T}$$

The input electric field of the electromagnetic calibration radiation C (fundamental field) a single frequency $\nu$ in the frequency-domain can be expressed as:

$$E_C(\nu) = |\alpha(\nu)| e^{i\phi(x,y,z)} \exp(-2\pi i \nu t)$$

where z is the propagation direction and x and y are transverse axes being perpendicular to the propagation direction. The second-harmonic field component generated at a single point in space $P_n = (u_n, u_n, z_n)$ inside the radiation conversion element for a single input frequency component has a second-harmonic amplitude, which is proportional to the amplitude $\alpha(v)$ squared of the fundamental field, and has the same phase $\phi_n(P_n) = \phi_n$ than the fundamental beam at that point in space:

$$E_{SH,n}(v, u, v, z) = \beta_n(u, v, z)|\alpha(v)|^2 e^{i\phi_n(u,v,z)} \exp(-2\pi i v t)$$

where $\beta_n$ is a proportionality constant, $u$ and $v$ are the transverse axis inside the radiation conversion element. The phase generated at the n-th point can be considered random. The propagation through the radiation conversion element only affects the value of proportionality constant and the phase. Since the phase is random to begin with, the contribution to the phase of the propagation inside the radiation conversion element can be disregarded. The proportionality constant gets randomized by the multiple scattering, thus at the exit of the radiation conversion element, a factor $\beta_n$ related to the n-th point can be considered.

The second-harmonic (i.e. frequency-doubled) field at a pixel in position $(x, y)$ of the detection unit is given by the sum of the fields of all components of the frequency-doubled electromagnetic radiation SH that reach said point $(x, y)$:

$$E_{SH}(v, x, y) = \sum_n \beta_n e^{i\phi_n} |\alpha(v)|^2 \exp(-2\pi i v t) = d(x, y)|\alpha(v)|^2 \exp(-2\pi i v t)$$

where the factor $d(x,y)$ is the result of the sum of random phasors

$$d(x, y) = \sum_n \beta_n e^{i\phi_n}$$

Therefore, its power of the frequency-double electromagnetic radiation at position (x,y) $P_{SH}(v, x, y)$ is:

$$P_{SH}(v, x, y) = \lim_{T \to \infty} \frac{1}{T} \int_{-T/2}^{T/2} \overline{|d(x,y)|^2 |\alpha(v)|^4} dt = I(x, y)|S(v - v_0)|^2$$

The term $I(x, y) = |d(x, y)|^2$ is the normalized spatial speckle image, which is the result of the random walk (and random phase generation) of the components of the frequency-doubled electromagnetic calibration radiation at the single frequency $v$ inside the radiation conversion element.

This can then be generalized from the monochromatic to the polychromatic case by considering a resulting spatial speckle image $I_{v(x,y)} = | d_v(x, y)|^2$ which depends on the input frequency $v$. The resulting total electric field at the pixel at position (x, y) is given by

$$E_{SH}(x, y) = \int_{-\infty}^{\infty} d_v(x, y)|a(v)|^2 \exp(-2\pi i \, 2v \, t) \, dv$$

and the total frequency-integrated power of the frequency-double electromagnetic radiation at position $P_{SH}(x, y)$ is

$$P_{SH}(x, y) = \int_{-\infty}^{\infty} I_v(x, y)|S(v - v_0)|^2 dv.$$

In this derivation, only second-harmonic generation (SHG) is considered. Sum frequency generation (SFG) and difference frequency generation (DFG) are disregarded, because the different components of the fundamental electromagnetic radiation travel along different paths inside the radiation conversion element, hence the probability of having a sufficiently high intensity of components with different frequencies in a single spatial point within the radiation conversion element is negligible.

The overall speckle power $\langle P_{SH} \rangle$ recorded by a single pixel of the detection unit, i.e. integrated over its full pixel area, for electromagnetic calibration radiation C having a spectrum $S_C(v - v_0)$ centered around the central frequency $v_0$ can be expressed as:

$$\langle P_{SH,C}(v_0)\rangle = \int_{-\infty}^{\infty} \langle I_v(x,y)\rangle |S_C(v-v_0)|^2 dv = (\langle I_v(x,y)\rangle * |S_C(v)|^2)(v_0)$$

where * stands for the convolution operation and the angular brackets stand for the spatial integration over the area of the pixel. Therefore, a spatial speckle image as a function of frequency can be obtained by measuring the second harmonic power for different input central frequencies $v_0$, and deconvolving the resulting function $\langle P_{SH,C}(v_0)\rangle$ with square of the power spectral density $|S_C(v)|^2$ of the calibration source. To do so, the Fourier transform of $\langle P_{SH,C}(v_0)\rangle$ may be calculated and then divided by the Fourier transform of $|S_C(v)|^2$, the result then being transformed back using the inverse Fourier-transform to obtain the expression $\langle I_v(x,y)\rangle$.

After recording a spatial calibration speckle image 101 for different central frequencies $v_0$ to form a calibration data set 100, this calibration data set 100 can be used to retrieve spectral information 300 of the unknown electromagnetic radiation F, i.e. an unknown spectrum $S_F(v)$.

To this aim, the speckle image (i.e. spatial power distribution) $P_{SH,F}$ generated by the unknown electromagnetic F is measured. Then, the correlation function $\Gamma(v_0)$ is calculated:

$$\Gamma(v_0) = \frac{\langle P_{SH,F} P_{SH,C}(v_0)\rangle}{\langle P_{SH,F}\rangle \langle P_{SH,C}(v_0)\rangle}$$

where $P_{SH,F}(v_0)$ is the calibration image previously recorded at the central frequency $v_0$.

The denominator is only a normalization factor, and the numerator can be expressed as:

$$\langle P_{SH,F} P_{SH,C}(v_0)\rangle = \int_{-\infty}^{\infty} |S_F(v_1)|^2 |S_C(v_2 - v_0)|^2 \langle I_{v_1} I_{v_2}\rangle dv_1 dv_2$$

The function $\gamma_v(v_1 - v_2)$ is the spectral correlation function of the speckle pattern, and it is defined as

$$\gamma_v(v_1 - v_2) = \frac{\langle I_{v_1} I_{v_2}\rangle}{\langle I_{v_1}\rangle \langle I_{v_2}\rangle}$$

In a case where the spectral decorrelation is much smaller than a targeted spectral resolution of the spectrometer, e.g. if the spectral decorrelation is on the order of tens of picometer while the spectral resolution of the spectrometer is on the order of the nanometers, the following approximation can be made:

$$\gamma_v(v_1 - v_2) = \delta(v_1 - v_2)$$

In other cases, the spectral correlation function $\gamma_v$ may be measured.

By using said approximation on the equation above, the following is obtained:

$$\langle P_{SH,F} P_{SH,C}(v_0)\rangle = \int_{-\infty}^{\infty} |S_F(v_1)|^2 |S_C(v_2 - v_0)|^2 \langle I_{v_1}\rangle \langle I_{v_2}\rangle \delta(v_1 - v_2) dv_1 dv_2$$

and, using the properties of the δ-distribution:

$$\langle P_{SH,F} P_{SH,C}(v_0)\rangle = \int_{-\infty}^{\infty} |S_F(v)|^2 |S_C(v - v_0)|^2 (\langle I_v\rangle)^2 dv$$

which can be written as a convolution:

$$\langle P_{SH,F} P_{SH,C}(v_0)\rangle = (|S_F(v)|^2 \langle I_v\rangle^2 * |S_C(v)|^2)(v_0).$$

Since $\langle I_v\rangle$, and $S_C(v)$ have been already determined during the calibration procedure and $\langle P_{SH,F} P_{SH,C}(v_0)\rangle$ is

obtained by calculating the correlation function $\Gamma(\nu_0)$ from the measurements of the image $P_{SH,F}$ generated by the unknown frequency-doubled radiation and the calibration image $P_{SH,C}(\nu_0)$ centered at frequency $\nu_0$, deconvolution can be used to extract $S_F(\nu)$.

Measurement examples

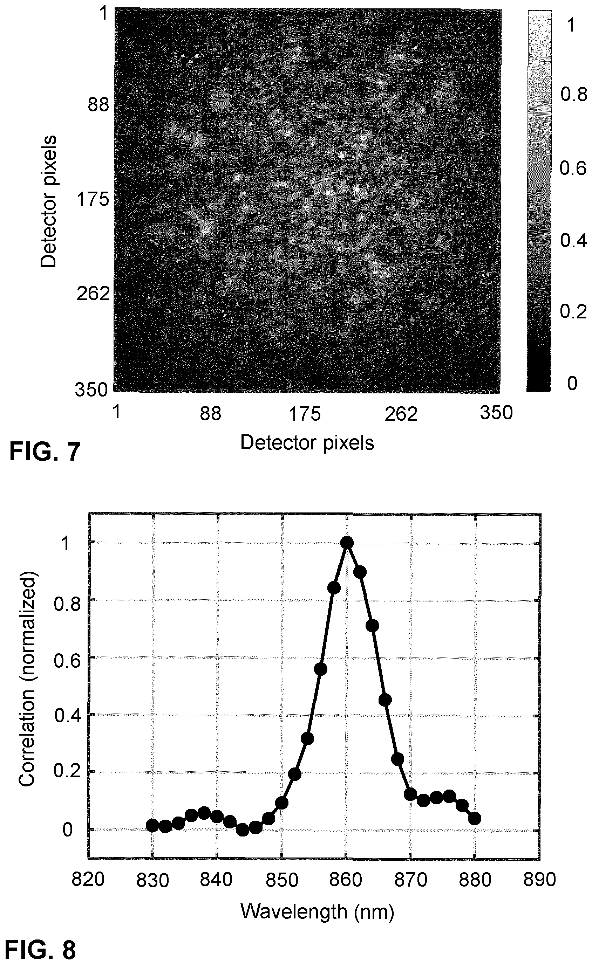

Fig. 7 shows an example of a spatial speckle image showing the interference of the components of the frequency-doubled electromagnetic radiation SH, centered around a center wavelength of 430 nm, that have been scattered in a radiation conversion element that comprises cubic lithium niobate nanoparticles having diameters ranging from 100 nm to 400 nm, the nanoparticles forming a layer with a thickness of 20 $\mu$m on a glass substrate having a thickness of 170 $\mu$m, wherein the image contains 350 x 350 pixels.

Fig. 8 shows the normalized correlation function $\Gamma(\nu_0)$ (plotted as a function of wavelength instead of central frequency $\nu_0$) exhibiting a peak centered around a wavelength of 860 nm.

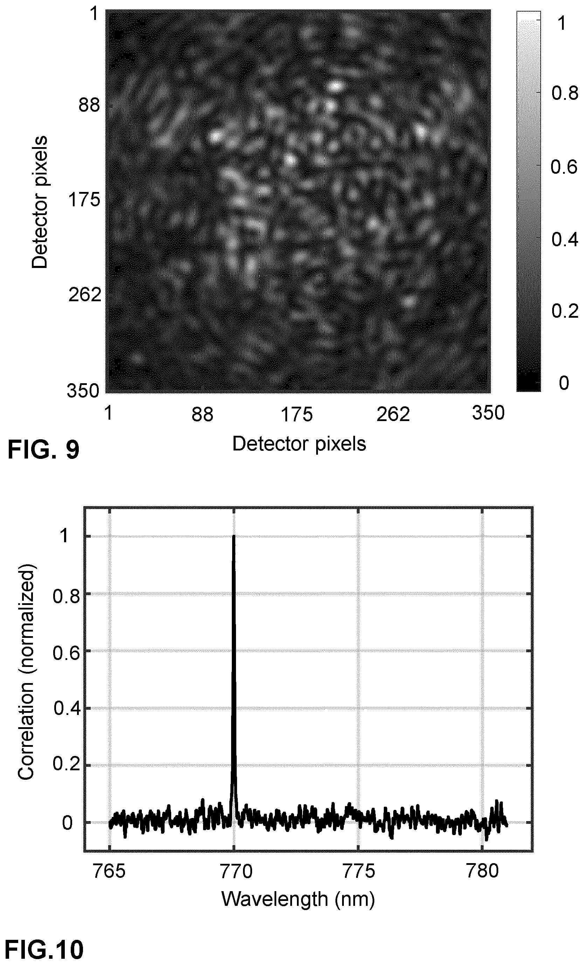

Instead of using a filter which is configured to block the electromagnetic radiation within the fundamental wavelength band, while allowing the frequency-doubled electromagnetic radiation to pass as described above, a filter which is configured to allow the electromagnetic radiation within the fundamental wavelength band to pass while blocking the frequency-doubled electromagnetic radiation may be arranged in front of the detection unit. In such a case, a spatial speckle image may be obtained from of the components of the electromagnetic radiation in the fundamental wavelength band, i.e. from the portion of the electromagnetic radiation that is scattered in the radiation conversion element, but that is not frequency-doubled. Such a linear spatial speckle image is shown in Fig. 9, with the corresponding normalized correlation function $\Gamma(\nu_0)$ of the narrow-band fundamental electromagnetic radiation F centered at 770 nm shown in Fig. 10.

Tunable optical setup

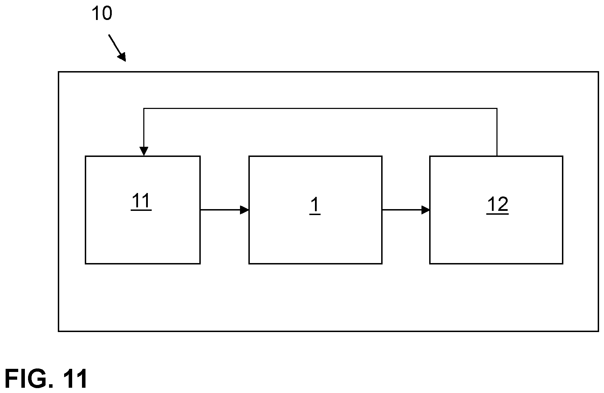

Fig. 11 schematically shows an embodiment of an optical setup 10, which comprises an optical source 11 emitting electromagnetic radiation with a tunable optical spectrum. The optical source 11 can in particular be a tunable optical parametric oscillator (OPO). The optical setup 10 further comprises the spectrometer assembly 1 according to any embodiment described above, as well as a control unit 12. The control unit is configured to receive spectral information from the spectrometer assembly 1 and to tune the optical spectrum of the electromagnetic radiation F emitted by the optical source 11 based on said spectral information.

LIST OF REFERENCE SIGNS

| | | | |
|---|---|---|---|
| 1 | spectrometer assembly | 14 | optical fiber |
| 2 | conversion element | 15 | fiber input port |
| 20 | particles | 100 | calibration data set |
| 21 | holes | 101 | calibration speckle image |
| 3 | detection unit | 200 | spatial speckle image |
| 4 | computing unit | 300 | spectral information |
| 5 | filter | F | (fundamental) electromagnetic radiation |
| 6 | first focusing lens | | |
| 7 | collimation lens | SH | frequency-doubled electromagnetic radiation |
| 8 | second focusing lens | | |
| 10 | optical setup | CSH | frequency-doubled electromagnetic calibration radiation |
| 11 | source | | |
| 12 | control unit | | |
| 13 | calibration source | | |

Claims

1. A spectrometer assembly (1) for determining spectral information about incoming electromagnetic radiation (F), comprising:

a radiation conversion element (2) that comprises a non-centrosymmetric material to frequency-double at least a portion of the incoming electromagnetic radiation (F) as the incoming electromagnetic radiation (F) propagates through the radiation conversion element (2), wherein the radiation conversion element (2) exhibits a spatially inhomogeneous structure such that the frequency-doubled electromagnetic radiation (SH) comprises components propagating in a plurality of different directions;

a detection unit (3) arranged after the radiation conversion element (2) with respect to a propagation direction defined by the incoming electromagnetic radiation (F), the detection unit (3) being configured to record a spatial speckle image that is generated by spatial interference of the components of the frequency-doubled electromagnetic radiation (SH) with each other, and

a computing unit (4) configured to retrieve spectral information about the electromagnetic radiation (F) based on said spatial speckle image.

2.  The spectrometer assembly (1) of claim 1, wherein the radiation conversion element (2) comprises a plurality of particles (20) comprising or consisting of the non-centrosymmetric material, wherein the particles (20) are randomly oriented within the radiation conversion element (2).

3.  The spectrometer assembly (1) of claim 2, wherein the particles (20) have a diameter that is between 100 nm and 2500 nm, preferably between 100 nm and 1000 nm.

4.  The spectrometer assembly (1) of claim 1, wherein the radiation conversion element comprises holes (21) distributed within the non-centrosymmetric material, the holes (21) being filled with a second medium exhibiting a different refractive index than the non-centrosymmetric material, preferably a lower refractive index than the non-centrosymmetric material, and the holes preferably having a diameter that is between 100 nm and 2500 nm, more preferably between 100 nm and 1000 nm.

5.  The spectrometer assembly (1) of claim 4, wherein the second medium is a gas, in particular, air.

6.  The spectrometer assembly (1) of any one of the preceding claims, wherein the radiation conversion element (2) has a thickness in propagation direction which is at least as large as, preferably at least 10 times larger than, a transport mean free path length experienced by the electromagnetic radiation (F) propagating within the radiation conversion element (2), the transport mean free path length being defined as an average distance that a photon travels in the radiation conversion element (2) before its direction is completely randomized.

7.  The spectrometer assembly (1) of any one of the preceding claims, wherein the non-centrosymmetric material is one of lithium niobate, barium titanate, gallium arsenide, aluminium gallium arsenide and zinc oxide.

8.  The spectrometer assembly (1) of any one of the preceding claims, wherein the incoming electromagnetic radiation (F) lies within a fundamental wavelength band and wherein the spectrometer assembly (1) further comprises a filter (5) arranged between the radiation conversion element (2) and the detection unit (3), the filter being configured to block electromagnetic radiation within said fundamental wavelength band while allowing the frequency-doubled electromagnetic radiation (SH) to pass.

9.  The spectrometer assembly (1) of any one of the preceding claims, wherein the detection unit (3) comprises a silicon (Si) detector and/or an indium gallium arsenide (InGaAs) detector and/or a germanium (Ge) detector and/or an indium antimonide (InSb) detector and/or a mercury cadmium telluride (HgCdTe) detector to record the spatial speckle image.

10. A calibration method (1000) for obtaining a calibration data set (100) using a spectrometer assembly (1) according to any one of the preceding claims, comprising:

a) sending electromagnetic calibration radiation (C) having a known spectrum through the radiation conversion element (2) of the spectrometer assembly (1), wherein at least a portion of the electromagnetic calibration radiation (C) is frequency-doubled within the radiation conversion element (2), and wherein the frequency-doubled electromagnetic calibration radiation (CSH) comprises components propagating in a plurality of different directions;

b) recording a spatial calibration speckle image (101) that is generated by spatial interference of the components of the frequency-doubled electromagnetic calibration radiation (CSH) with each other;

c) repeating steps a) and b) multiple times for a plurality of different known optical spectra in order to obtain a calibration speckle image (101) for each of the different optical spectra, the calibration speckle images forming the calibration data set (100).

11. A method for determining spectral information (2000) about incoming electromagnetic radiation (F) to be analyzed using a spectrometer assembly (1) according to any one of claims 1-9, the method comprising:

  a) sending the incoming electromagnetic radiation (F) to be analyzed through the radiation conversion element (2) of the spectrometer assembly (1), wherein at least a portion of the incoming electromagnetic radiation (F) is frequency-doubled within the radiation conversion element (2), and wherein the frequency-doubled portion of the electromagnetic radiation (SH) comprises components propagating in a plurality of different directions;
  b) recording a spatial sample speckle image (200) generated by spatial interference of the components of the frequency-doubled electromagnetic radiation (SH) with each other, and
  c) retrieving spectral information (300) about the incoming electromagnetic radiation (F) based on said spatial sample speckle image (200).

12. The method of claim 11, wherein retrieving the spectral information (300) comprises:
  computing correlation values between the spatial sample speckle image (200) and a calibration data set (100) comprising spatial calibration speckle images (101).

13. The method of claim 12, further comprising:
  obtaining the calibration data set (100) using the calibration method of claim 10.

14. An optical setup (10) comprising:

  an optical source (11), in particular an optical parametric oscillator, configured to emit electromagnetic radiation (F) with a tunable optical spectrum;
  the spectrometer assembly (1) of any of claims 1-9,
  a control unit (12), wherein the control unit (12) is configured to receive spectral information from the spectrometer assembly (1) and to tune the optical spectrum of the electromagnetic radiation (F) emitted by the optical source (11) based on said spectral information.

15. A method of operating an optical setup (10) according to claim 14, the method comprising:

  determining spectral information about the electromagnetic radiation (F) emitted by the optical source (11) using the method of any one of claims 11-13;
  tuning the optical spectrum of the electromagnetic radiation (F) based on said spectral information.

**FIG. 1**

**FIG. 2**

FIG. 3

FIG. 4

FIG. 5

FIG. 6

**FIG. 7**

**FIG. 8**

FIG. 9

FIG.10

10

FIG. 11

Europäisches
Patentamt

European
Patent Office

Office européen
des brevets

## EUROPEAN SEARCH REPORT

**Application Number**

EP 24 15 7254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUN YIWEI ET AL: "Near-infrared speckle wavemeter based on nonlinear frequency conversion", OPTICS LETTERS, vol. 48, no. 15, 25 July 2023 (2023-07-25), page 4049, XP093185106, US ISSN: 0146-9592, DOI: 10.1364/OL.493442 Retrieved from the Internet: URL:https://opg.optica.org/view_article.cfm?pdfKey=db27bec5-1f92-4048-a14cc81e8832fcd7_535472> * figure 1 * | 1-15 | INV. G01J3/02 G01J3/28 G01J3/44 G01J3/453 |
| A | MORANDI ANDREA ET AL: "Multiple Scattering and Random Quasi-Phase-Matching in Disordered Assemblies of LiNbO 3 Nanocubes", ACS PHOTONICS, vol. 9, no. 6, 15 June 2022 (2022-06-15), pages 1882-1888, XP093185313, ISSN: 2330-4022, DOI: 10.1021/acsphotonics.2c00210 Retrieved from the Internet: URL:https://pubs.acs.org/doi/pdf/10.1021/acsphotonics.2c00210> * the whole document * | 1-15 | |
| | -/-- | | **TECHNICAL FIELDS SEARCHED (IPC)** G01J |

The present search report has been drawn up for all claims

| Place of search | Date of completion of the search | Examiner |
|---|---|---|
| Munich | 12 July 2024 | Parise, Berengere |

EPO FORM 1503 03.82 (P04C01)

Europäisches
Patentamt

European
Patent Office

Office européen
des brevets

## EUROPEAN SEARCH REPORT

**Application Number**

EP 24 15 7254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SÁNCHEZ-DENA OSWALDO ET AL: "Lithium Niobate Single Crystals and Powders Reviewed-Part I", CRYSTALS, vol. 10, no. 11, 27 October 2020 (2020-10-27), page 973, XP093185336, CH ISSN: 2073-4352, DOI: 10.3390/cryst10110973 Retrieved from the Internet: URL:https://www.mdpi.com/2073-4352/10/11/973/pdf> * the whole document * | 1-15 | |

TECHNICAL FIELDS
SEARCHED (IPC)

The present search report has been drawn up for all claims

| Place of search | Date of completion of the search | Examiner |
|---|---|---|
| Munich | 12 July 2024 | Parise, Berengere |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................
& : member of the same patent family, corresponding
document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. MORANDI et al.** Multiple Scattering and Random Quasi-Phase-Matching in Disordered Assemblies of LiNbOa Nanocubes. *ACS Photonics*, 2022, 1882-1888
- **A. BLANCO et al.** Large-scale synthesis of a silicon photonic crystal with a complete three-dimensional bandgap near 1.5 micrometres. *Nature*, 2000, vol. 405, 437-440

- **N. MULLER**. Silicon Hyperuniform Disordered Photonic Materials with a Pronounced Gap in the Shortwave Infrared. *Advanced Optical Materials*, 2014, vol. 2, 115-119